Europäisches Patentamt

European Patent Office

Office européen des brevets

(19)

(11) Numéro de publication: **0 128 796 B1**

(12) **FASCICULE DE BREVET EUROPEEN**

(45) Date de publication du fascicule du brevet: 28.01.87

(51) Int. Cl.⁴: **H 02 P 7/62**

(21) Numéro de dépôt: 84401016.5

(22) Date de dépôt: 17.05.84

(54) Procédé de régulation de l'alimentation des moteurs électriques et dispositif de mise en oeuvre du procédé.

(30) Priorité: 24.05.83 FR 8308946

(43) Date de publication de la demande: 19.12.84 Bulletin 84/51

(45) Mention de la délivrance du brevet: 28.01.87 Bulletin 87/5

(84) Etats contractants désignés: AT BE CH DE GB IT LI LU NL SE

(56) Documents cités:
FR - A - 2 124 731
FR - A - 2 439 503
GB - A - 2 075 716
US - A - 3 611 089
US - A - 3 718 847
US - A - 4 249 120
US - A - 4 389 607

(73) Titulaire: **LA TELEMECANIQUE ELECTRIQUE, 33 bis, avenue du Maréchal Joffre, F-92000 Nanterre (FR)**

(72) Inventeur: **Gousset, Alain, 45, avenue Fréderic Mistral, F-06130 Grasse (FR)**

(74) Mandataire: **Marquer, Francis et al, CABINET MOUTARD 35, avenue Victor Hugo Résidence Champfleury, F-78180 Voisins-le-Bretonneux (FR)**

**Description**

La présente invention se rapporte à l'alimentation des enroulements statoriques d'un moteur asynchrone par un montage utilisant un convertisseur de fréquence du type à modulation de largeur d'impulsion et comportant une compensation de la commande du modulateur, permettant de faire varier la modulation suivant l'état de charge du moteur.

Il est déjà connu, d'après le brevet US 3 611 089, de modifier l'excitation du moteur pour tenir compte du fonctionnement en moteur et en générateur du moteur à basse vitesse, en ajoutant un signal de compensation pendant les phases motrices et en retranchant ce signal de compensation pendant les phases génératrices.

La discrimination entre les phases motrices et génératrices est obtenue en captant un signal représentatif du courant fourni au moteur et en lui appliquant un coefficient ±k, le coefficient —k étant appliqué pour les signaux en phase avec la tension du réseau, et le coefficient +k pour les signaux en opposition de phase.

Toutefois, ce dispositif connu travaille essentiellement sur le courant du moteur, ce qui nécessite des capteurs de courant onéreux constitués, soit par des transformateurs d'intensité, soit par des sondes à effet Hall.

On connaît, par ailleurs, selon le brevet US 3 718 847, un circuit de commande pour moteur à induction comprenant:

— un compteur en anneau qui fournit des signaux de commande à trois flip-flop commandant chacun les interrupteurs d'une phase du moteur en opposition de phase,

— un circuit qui module le signal fourni par les flip-flop par une fréquence différente dont le rapport cyclique est fonction d'un premier signal représentatif de la charge du moteur, d'un deuxième signal représentatif de la tension du moteur, ainsi que d'un troisième signal représentatif de la fréquence d'alimentation du moteur.

Dans ce circuit de commande, la charge du moteur est fournie par un circuit déterminant le décalage entre les courants et les tensions dans le moteur. Pour déterminer cette charge, le courant est modulé par le signal logique provenant de l'onduleur.

L'invention a pour objet un procédé d'alimentation d'un moteur asynchrone par des tensions et des courants symétriques et périodiques, et qui soit peu onéreux, tout en étant apte à discriminer les fonctionnements à vide du moteur des fonctionnements en charge, pour engendrer un signal de compensation qui influe sur les signaux d'alimentation.

Dans le procédé de l'invention, pour déterminer la charge, c'est la tension qui est modulée par un signal logique combinant les signaux d'allumage des interrupteurs de l'onduleur. D'autre part, le courant intervient en contre-réaction, alors que dans le brevet US 3 718 847, c'est la tension qui est concernée.

L'invention permet d'obtenir un couple imortant à basse vitesse en charge, tout en état sûr qu'à vide, le moteur ne sera pas suralimenté.

Par conséquent, à vide, le moteur fera peu de bruit et aura peu de pertes. Il existe toujours un certain niveau de bruit.

Un autre objet de l'invention est un dispositif permettant de mettre en oeuvre le procédé.

Le procédé de régulation de l'alimentation d'un moteur asynchrone polyphasé suivant l'invention tient compte de l'état de charge d'un moteur pour régler les signaux de commande des interrupteurs d'un pont polyphasé aux bornes duquel le moteur est branché, les signaux de commande des interrupteurs des voies haute et basse, pour les deux bras relatifs d'une même phase du pont, sont identiques et déphasés de 180°; ils ont un angle de passage compris entre 120° et 180°; et ils sont modulés, sur 60° électriques de leur angle de passage, par un signal dont la fréquence et le rapport cyclique dépendent, d'une part, d'une tension de référence et, d'autre part d'un signal de retour qui représente l'image de la force électro-motrice mesurée aux bornes de deux phases UV du moteur, force électro-motrice dont la valeur est multipliée par un coefficient —k pendant l'intervalle de temps compris entre le milieu de l'intervalle de l'angle de passage de la commande de la voie basse associée à ladite phase du moteur et le milieu de l'intervalle de l'angle de passage de la commande de la voie haute associée à la phase du moteur; et par un coefficient +k pendant l'intervalle de temps compris entre le milieu de l'intervalle de l'angle de passage de la commande de la voie haute de la phase du moteur et le milieu de l'intervalle de l'angle de passage de la commande de la voie basse de cette même phase.

Le dispositif de mise en oeuvre du procédé de régulation de l'alimentation des enroulements statoriques d'un moteur asynchrone polyphasé en fonction de la charge d'un moteur, suivant l'invention, comprend un pont d'interrupteurs composé de six interrupteurs commandés, utilisé pour obtenir un convertisseur de fréquence du type à modulation de largeur d'impulsion alimentant le moteur, et les signaux de commande sont fournis, pour les voies hautes et pour les voies basses, respectivement par un premier et un second circuits délivrant des signaux de commande ayant un angle de passage fourni par un compteur en anneau et modulés par un signal de fréquence différente délivrée par un troisième circuit fournissant des signaux dont la fréquence et le rapport cyclique sont fonction de l'écart entre un signal représentatif des courants des phases du moteur fournis par un amplificateur et un deuxième signal; chacun des signaux de commande, issus du premier circuit et correspondant aux interrupteurs des voies hautes d'une phase, est identique, mais décalé de 180° par rapport à chacun des signaux de commande issus du deuxième circuit et correspondant aux interrupteurs des voies basses; ledit deuxième signal est fourni par un quatrième circuit comportant un régulateur proportionnel intégral, recevant sur son entrée un signal fourni par un sommateur recevant lui-même, d'une part une tension de référence, d'autre part, une tension de retour fournie par un circuit multiplicateur par un coefficient positif ou négatif, suivant l'état d'une entrée de commande, par l'intermédiaire d'un deuxième sommateur, ledit circuit multiplicateur opérant sur la tension prise entre deux phases du moteur, la commande du signe dudit coefficient étant fournie par un circuit logique qui reçoit à ses entrées les signaux de commande des angles de passage des interrupteurs des voies haute et basse associés à la phase observée.

D'autres caractéristiques et avantages de l'invention apparaîtront plus clairement à la lecture de la description qui suit, faite en se référant aux dessins annexés, dans lesquels:

la figure 1 représente le schéma de principe d'un dispositif permettant la mise en oeuvre du procédé;

la figure 2 est un diagramme, en fonction du temps, des principaux signaux permettant d'expliquer le fonctionnement du dispositif et du procédé, en prenant l'exemple d'un angle de passage de 120° pour chaque interrupteur; et

la figure 3 illustre un exemple de réalisation d'un circuit intervenant dans la mise en oeuvre du procédé.

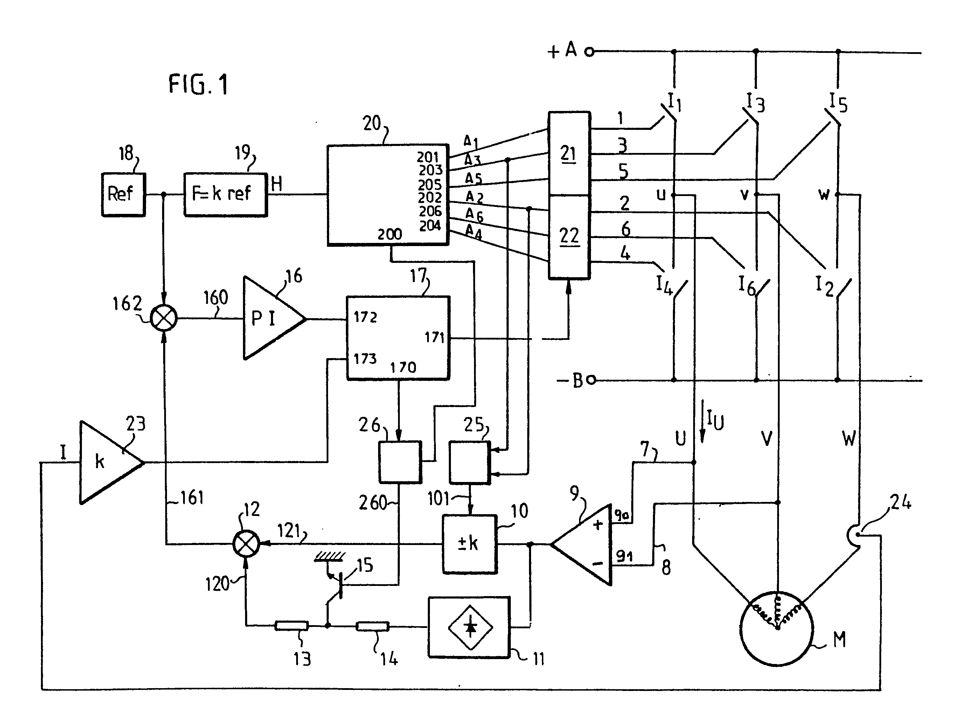

La figure 1 représente le schéma du circuit de commande des interrupteurs $I_1$ à $I_6$ d'un pont d'alimentation d'un moteur asynchrone triphasé. Ce pont est alimenté aux bornes A, B par une tension continue.

Les points milieu du pont u, v, w sont branchés de façon connue aux trois phases U, V, W du moteur asynchrone M.

La tension entre deux phases $U_{UV}$ est envoyée, au moyen de deux conducteurs 7, 8, aux entrées, respectivement positive 90 et négative 91, d'un amplificateur opérationnel 9 dont la sortie est branchée à l'entrée d'un circuit 10 appliquant un coefficient $\pm k$ au signal de sortie de l'amplificateur 9.

La sortie de l'amplificateur 9 est également branchée à l'entrée d'un pont redresseur 11. La sortie du pont redresseur 11 est branchée à une entrée 120 d'un additionneur 12 par deux résistances montées en série 13, 14. Le point commun aux deux résistances 13, 14 est relié à la masse par un transistor 15, dont la base est commandée par le signal de la sortie 170 d'un circuit 17 dont la fonction sera expliquée ci-après.

Une deuxième entrée 121 de l'additionneur 12 reçoit le signal issu du circuit 10 qui multiplie le signal à son entrée par un coefficient $\pm k$. Le choix du signe du coefficient est effectué sur l'entrée 101, par un circuit logique 25 qui reçoit en entrée certains des signaux de commande de l'angle de passage des interrupteurs, de façon à engendrer un signal commandant le changement de signe au moment voulu.

Dans l'exemple choisi de conduction à 120°, un circuit 25 réalise la fonction OU entre les signaux $A_2$ et $A_3$, déterminant les angles de passage des interrupteurs $I_2$, $I_3$. Ainsi, lorsque $A_2$ ou $A_3$ est au niveau 1, la sortie de 25 est au niveau 1 et commande la multiplication par $+k$. Lorsque la sortie de 25 est au niveau zéro, elle commande la multiplication par $-k$.

La sortie de l'additionneur 12 qui délivre un signal négatif est branchée, par un sommateur 162, à l'entrée 160 d'un circuit 16 réalisant une fonction proportionnelle et intégrale. Une deuxième entrée du sommateur 162 reçoit un signal de référence matérialisé par une tension réglable fournie de façon connue, par exemple par un potentiomètre réglable 18.

La sortie du circuit 16 est branchée à l'entrée 172 du circuit 17 qui établit une comparaison avec un signal, image des courants de la machine, reçu à l'entrée 173; le résultat de cette comparaison est utilisé pour engendrer un signal de fréquence et de rapport cyclique variables sur la sortie 171.

Le circuit 17 comprend également un circuit logique qui délivre en 170 un signal permettant de mettre le transistor 15 dans l'état conducteur ou dans l'état bloqué. Ce signal 170 est le signal complémentaire du signal 171, c'est-à-dire qu'il est au niveau 1 lorsque le signal 171 est au niveau zéro. Le transistor 15 est validé par la sortie 260 du circuit 26, lorsque la fréquence de commutation des phases du moteur croît et devient supérieure à une fréquence donnée, par exemple 35 Hz, par l'intermédiaire de la sortie 200. Le circuit logique 26 effectue la fonction ET entre les informations 170 et 200.

Le signal reçu à l'entrée 173 du circuit 17 est délivré par la sortie d'un amplificateur opérationnel 23 de gain k, dont l'entrée reçoit un signal (I) représentatif des courants dans les phases de la machine; ce signal est capté, par exemple, par des transformateurs de courant 24, ou par tout autre moyen.

La tension de référence fournie par le circuit 18 est également reçue par un oscillateur à fréquence variable 19, dont la fréquence est proportionnelle à la tension délivrée en 18. La sortie 19 fournit des signaux d'horloge H qui sont délivrés à un compteur en anneau 20, lequel engendre sur ses sorties 201 à 206 des signaux représentatifs des angles de passage $A_1$ à $A_6$ de chaque voie.

Ces signaux sont délivrés, par les sorties 201 à 206 du compteur en anneau, à deux circuits logiques 21, 22 qui élaborent des signaux de commande des interrupteurs des voies hautes et basses en fonction du signal modulation 171. Les signaux des sorties A2 et A3 du compteur en anneau sont envoyés à un boîtier logique 25 qui élabore les signaux de commande de changement de gain du circuit 10.

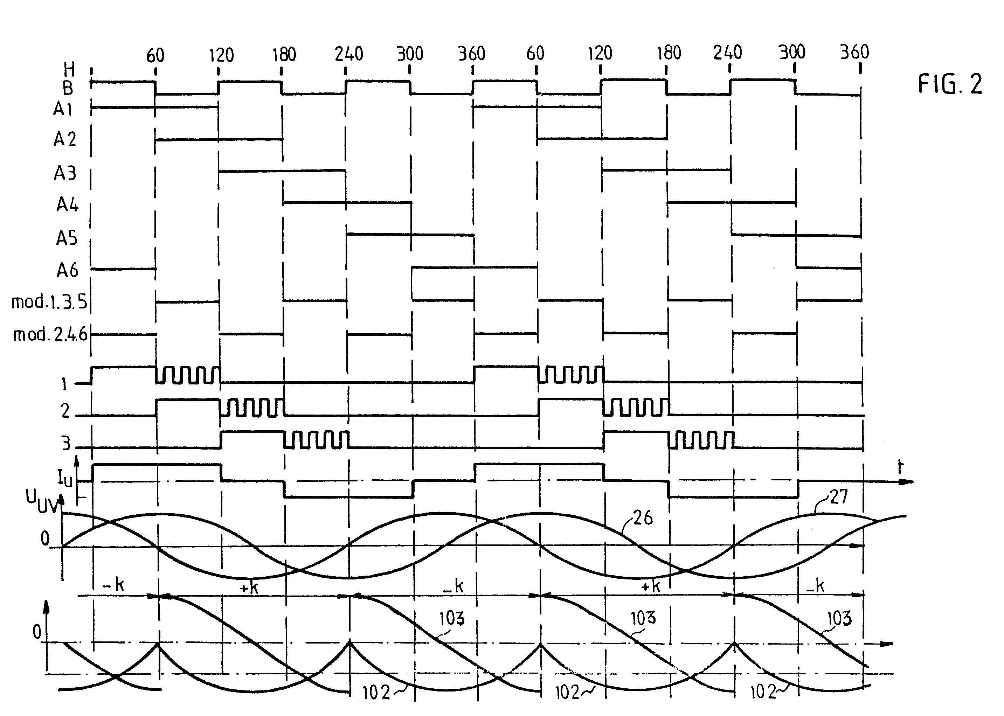

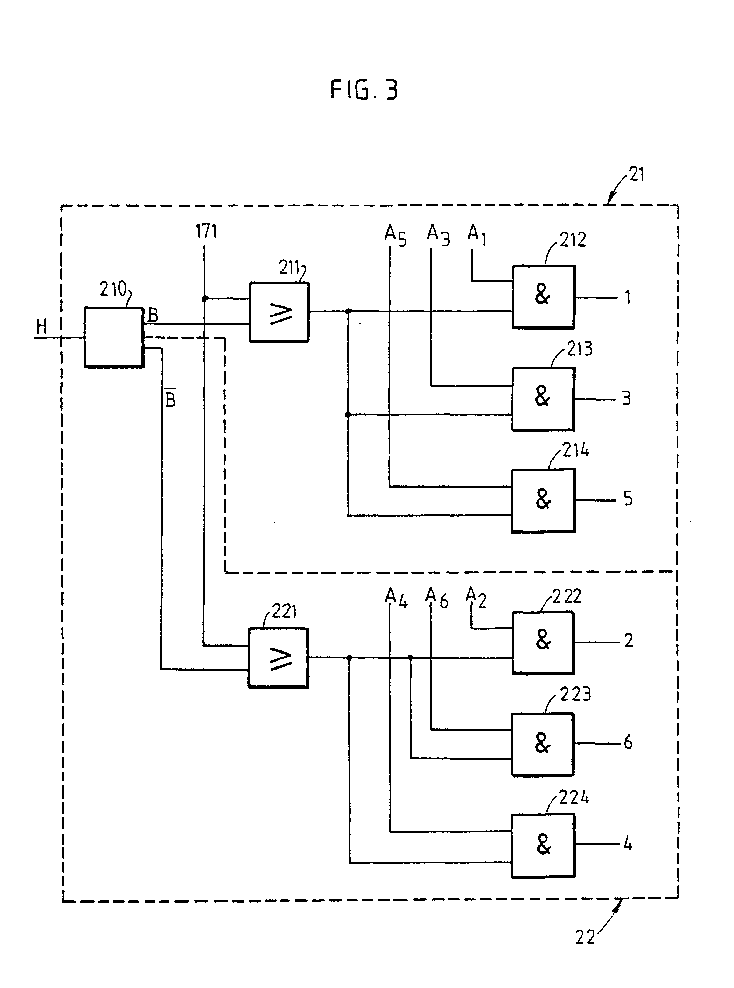

Les circuits 21 et 22 représentés à la figure 3, sont réalisés par exemple par une bascule du type T, 210, dont la sortie B délivre un signal représenté à la figure 2.

Ce signal B est envoyé à l'entrée d'un circuit OU 211, dont une deuxième entrée reçoit le signal de modulation 171. La sortie du circuit OU 211 est branchée respectivement à chaque première entrée des trois circuits ET 212, 213, 214, dont les sorties respectives délivrent les signaux 1, 3, 5, lorsque chaque deuxième entrée des circuits ET 212, 213, 214, reçoit respectivement les signaux $A_1$, $A_3$, $A_5$, délivrés par les sorties 201, 203, 205 du compteur en anneau 20.

De même, la sortie complémentaire de la bascule 210 délivre un signal $\bar{B}$ qui est envoyé à l'entrée d'une porte OU 221 qui reçoit sur sa deuxième entrée le signal de modulation 171. La sortie du circuit OU 221 est branchée à chaque première entrée de trois circuits ET 222, 223, 224, dont les sorties délivrent les signaux 2, 6, 4, lorsque les deuxièmes entrées des circuits 222, 223, 224 reçoivent respectivement les signaux $A_2$, $A_6$, $A_4$.

Ainsi, sur la sortie 1 de la porte 212, on a bien le signal 1 qui est au niveau 1, soit pendant que B et $A_1$ sont à 1, soit pendant que 171 et $A_1$ sont à 1.

De l'explication qui précède, on déduira aisément, par analogie, le fonctionnement des autres voies.

Les sorties du circuit 21 commandent les interrupteurs $I_1$, $I_3$, $I_5$, qui constituent les voies hautes, tandis que les sorties du circuit 22 commandent les interrupteurs $I_4$, $I_6$, $I_2$, qui constituent les voies basses.

La figure 2 illustre le fonctionnement du dispositif dans le cas d'un angle de passage de 120°.

Le signal H est obtenue à la sortie du générateur de fréquence 19. Les signaux $A_1$, $A_2$, $A_3$, $A_4$, $A_5$, $A_6$ représentent respectivement les angles de passage des interrupteurs $I_1$ à $I_6$ du pont.

Pour l'exemple retenu, le signal $A_1$ montre que l'intereupteur $I_1$ de la phase U du pont doit être conducteur, donc fermé, pendant 120° électriques et ouvert pendant les 240° de la période du signal.

Le signal $A_2$ est décalé de 60° en retard par rapport à $A_1$ et ferme l'interrupteur 2 pendant l'intervalle de temps compris entre 60° et 180° de la période, et ainsi de suite pour les signaux $A_3$ à $A_6$.

Une modulation est appliquée aux signaux qui commandent l'ouverture et la fermeture des interrupteurs. Les instants où sont appliquées ces modulations, sont représentés, pour les signaux des interrupteurs des voies hautes, par le signal mod 1 - 3 - 5 et, pour les interrupteurs $I_2$, $I_4$, $I_6$ des voies basses, par le signal mod 2 - 4 - 6. On comprend que le signal de commande de la fermeture de l'interrupteur 1 sera modulé pendant les derniers 60° de son angle de passage.

Le signal de modulation est fourni aux circuits 21 et 22 par la sortie 171 du circuit 17.

Le signal de commande de l'interrupteur $I_1$ issu du circuit 21 est représenté avec la modulation sur 60° à la ligne marquée 1; de même le signal de commande de l'interrupteur $I_3$ est représenté par le diagramme marqué 3.

Le signal de commande de la voie 5 n'est pas représenté, mais se déduit, comme 1 et 3, des signaux $A_5$ et mod 1 - 3 - 5.

La référence 2 de la figure 2 représente le diagramme du signal de commande de l'interrupteur $I_2$ (voie basse).

Les autres signaux 4 et 6 se déduiront de la même façon des signaux $A_4$, respectivement $A_6$, et de mod 2 - 4 - 6.

Le diagramme $I_U$ représente, en fonction du temps, l'évolution du courant qui alimente la phase U du moteur. La forme du signal représentée ne correspondant pas à la réalité, mais à une forme idéalisée que l'on a choisie pour simplifier la représentation. La tension aux bornes U et V du moteur sera un signal composite comprenant un signal symétrique en phase avec le courant $I_U$ et un signal $U_{UV}$ pratiquement sinusoïdal, représentant la force électro-motrice de moteur, dont le déphasage par rapport au courant $I_U$ va varier. Pour des raisons de clarté de l'exposé, on a seulement représenté la tension $U_{UV}$ qui matérialise la force électro-motrice du moteur.

En supposant que la machine en charge se comporte pratiquement comme une résistance pure, c'est-à-dire que $\cos\varphi = 1$, la tension $U_{UV}$ captée aux bornes U et V du moteur sera en phase avec le courant $I_U$, comme on l'a représenté sur la courbe 26.

De même, si l'on suppose que la machine à vide se comporte comme une self pure, c'est-à-dire que son $\cos\varphi = 0$, la tension $U_{UV}$ sera en avance de 90° électriques par rapport au courant $I_U$, comme on l'a représenté sur la courbe 27. Les courbes 26 et 27 représentent le signal obtenu à la sortie de l'amplificateur 9. Dans la réalité, les courbes $I_U$ et $U_{UV}$ sont plus complexes; mais, dans un souci de clarté, on les a simplifiées, sans pour que cela le fonctionnement du dispositif s'en trouve modifié. Les signaux issus du circuit 9 sont multipliés par un coefficient $\pm k$ à des instants bien précis, comme on l'a représenté sur la figure 2.

Si, à l'entrée du circuit 10, on a une tension correspondant à un moteur en charge représenté par la courbe 26, le résultat de la transformation du signal de la courbe 26 est représenté par la courbe 103 et est un signal de valeur moyenne nulle. On comprend ainsi que le signal qui représente la force électro-motrice du moteur en charge n'intervient pas dans la régulation, mais aussi que le signal en phase avec le courant capté en U et V, constitue l'information de retour, image du régime de charge de la machine. Par contre, si le moteur est à vide, la tension représentée par la courbe 27 est transformée en un signal 102 à la sortie du circuit 10. Ce signal 102 a une valeur moyenne négative qui s'ajoute au signal 120 de modulation en phase avec le courant $I_U$, dont la valeur absolue est inférieure à celle du signal 102. Il en résulte que le signal 161 se retranche du signal de référence 18. Ainsi, lorsque le moteur est à vide, le signal de retour arrivant en 160 est augmentée de la valeur moyenne du signal traité, image de l'état de charge de la machine, alors que, lorsque le moteur est en charge, le signal de retour en 160 devient minimal.

Le signal de référence ne subit jamais de modification pour un affichage donné; c'est la valeur du signal de retour qui varie en fonction de la charge.

Une modification du signal délivré à la sortie du circuit 16 va entraîner une modification de la fréquence et du rapport cyclique du signal de modulation sortant en 171.

Ainsi, si le moteur est à vide, le signal de retour présent à l'entrée 172 voit sa valeur moyenne augmentée, ce qui entraîne une baisse de l'excitation du moteur.

La commutation du gain de $-k$ à $+k$ doit se faire, comme on peut le voir sur la figure 2, au milieu de l'intervalle de conduction de l'interrupteur de la voie haute du pont associé à la phase du pont que l'on observe. (Ici, $I_1$).

Enfin, la commutation du gain de $+k$ à $-k$ doit se faire au milieu de l'intervalle de conduction de l'interrupteur de la voie basse du pont associé à la phase du pont que l'on observe. (Ici, $I_4$).

D'autre part, une des conditions essentielles du bon fonctionnement de l'invention est que les signaux de commande des voies haute et basse des phases soient de forme identique, mais déphasés de 180°, de façon que les courants circulant dans les phases du moteur aient une forme symétrique et que les tensions que l'on observe entre les phases soient composées d'un signal symétrique en phase avec le courant associé et d'un signal dont le déphasage par rapport à ce courant $I_U$ varie en fonction de l'état de charge du moteur. On a représenté un tel signal par les courbes 26 et 27, pour l'exemple des phases choisies.

Pour que le courant $I_U$ soit symétrique, il est nécessaire de commander les interrupteurs haut et bas du pont avec des signaux de forme identique, mais déphasés.

Enfin, pour que le signal $U_{UV}$ représentant la force électro-motrice du moteur et déphasé par rapport au courant $I_U$ soit observable il ne faut pas que tous les potentiels aux bornes des différentes phases du moteur à un instant donné soient fixés. Par conséquent, il est nécessaire que l'angle de passage des interrupteurs reste compris entre 120° et 180°, par exemple 150°.

Le fonctionnement optimum du dispositif est obtenue pour un angle de passage de 120°. Dans le cas où on choisit un angle de conduction différent de 120°, on est amené à modifier le circuit logique 25. Cette modification est à la portée de l'homme de métier et ne sera pas exposée.

Lorsque l'angle de conduction tend vers 180°, la composante du signal «image de la force électro-motrice» de la machine tend vers zéro. Le système de correction 10 devient alors de moins en moins sensible au type de régime de charge.

Il est donc nécessaire de lui adjoindre une deuxième boucle constituée par le redresseur 11, les deux résistances 13, 14 et le transistor 15, pour envoyer, à l'entrée négative 120, un signal dont la valeur moyenne positive servira à corriger le signal de référence en l'augmentant et, par conséquent, en accroissant l'excitation du moteur.

La transmission de ce signal de correction est commandée par le blocage du transistor 15, qui est effectue lorsque la modulation diminue et proportionnellement à celle-ci.

### Revendications

1. Procédé de régulation de l'alimentation d'un moteur asynchrone polyphasé (M), tenant compte de l'état de charge d'un moteur pour régler les signaux de commande des interrupteurs ($I_1$ à $I_6$) d'un pont polyphasé aux bornes duquel le moteur est branché, dans lequel les signaux de commande des interrupteurs des voies haute et basse, pour les deux bras relatifs d'une même phase du pont, sont identiques et déphasés de 180°; ont un angle de passage ($A_1$ à $A_6$) compris entre 120° et 180°; et sont modulés (mod 1 - 3 - 5, mod 2 - 6 - 4), sur 60° électriques de leur angle de passage, par un signal (171) dont la fréquence et le rapport cyclique dépendent, d'une part, d'une tension de référence (18) et, d'autre part d'un signal de retour (161) qui représente l'image de la force électro-motrice mesurée aux bornes de deux phases (UV), du moteur, force électro-motrice dont la valeur est multipliée par un coefficient —k pendant l'intervalle de temps compris entre le milieu de l'intervalle de l'angle de passage de la commande de la voie basse associée à ladite phase du moteur et le milieu de l'intervalle de l'angle de passage de la commande de la voie haute associée à la phase du moteur; et par un coefficient +k pendant l'intervalle de temps compris entre le milieu de l'intervalle de l'angle de passage de la commande de la voie haute de la phase du moteur et le milieu de l'intervalle de l'angle de passage de la commande de la voie basse de cette même phase.

2. Procédé selon la revendication 1, caractérisé en ce que ledit signal de retour est corrigé par addition de la valeur positive d'un signal supplémentaire (120) qui représente un pourcentage de la tension redressée (11) prélevée auxdites bornes (UV) du moteur, ledit pourcentage étant défini par un interrupteur statique (15) modulé proportionnellement à la fréquence de modulation des interrupteurs du pont.

3. Dispositif de mise en oeuvre du procédé selon la revendication 1, comprenant un pont d'interrupteurs ($I_1$ à $I_6$) convertisseur de fréquence du type à modulation de largeur d'impulsion alimentant le moteur (M), dans lequel les signaux de commande sont fournis, pour les voies hautes ($I_1$, $I_3$, $I_5$), et pour les voies basses ($I_2$, $I_4$, $I_6$), respectivement par un premier (21) et un second (22) circuits délivrant des signaux de commande ayant un angle de passage fourni par un compteur en anneau (20) et modulés par un signal (171) de fréquence différente délivré par un troisième circuit (17) fournissant des signaux dont la fréquence et le rapport cyclique sont fonction de l'écart entre un signal représentatif des courants des phases du moteur fournis par un amplificateur (23) et un deuxième signal; chacun des signaux de commande issus du premier circuit (21) et correspondant aux interrupteurs des voies hautes d'une phase, étant identique, mais décalé de 180° par rapaport à chacun des signaux de commande issus du deuxième circuit (22) et correspondant aux interrupteurs des voies basses; ledit deuxième signal étant fourni par un quatrième circuit comportant un régulateur proportionnel intégral (16), recevant sur son entrée un signal fourni par un sommateur (162) recevant lui-même, d'une part une tension de référence (18), d'autre part, une tension de retour (161) fournie par un circuit (10) multiplicateur par un coefficient positif ou négatif, suivant l'état d'une entrée de commande (101), par l'intermédiaire d'un deuxième sommateur (12), ledit circuit multiplicateur (10) opérant sur la tension prise entre deux phases (U, V) du moteur, la commande (101) du signe dudit coefficient étant fournie par un circuit logique (25) qui reçoit à ses entrées les signaux de commande des angles de passage des interrupteurs des voies haute et basse associés à la phase observée.

4. Dispositif selon la revendication 3, caractérisé en ce que ladite tension de retour comprend en outre un cinquième signal ajouté à la sortie dudit circuit multiplicateur (10), ledit cinquième signal étant fourni par un circuit redresseur (11) qui reçoit la tension prise entre les deux dites phases (UV) et est relié par un interrupteur (15) à l'entrée d'un additionneur (12), dont la deuxième entrée (121) reçoit le signal de sortie du circuit multiplicateur (10); ledit interrupteur (15) étant commandé par une porte ET (26) à une entrée de laquelle est appliqué un signal (170) complémentaire dudit signal de fréquence différente (171) et à l'autre entrée de laquelle est appliquée un niveau logique 1 lorsque la fréquence des commutations des phases du moteur est supérieure à une valeur prédéterminée.

**Patentansprüche**

1. Regelverfahren für die Versorgung eines asynchronen Mehrphasenmotors (M), das den Belastungszustand des Motors berücksichtigt, um die Steuersignale der Schalter ($I_1$ bis $I_6$) einer Mehrphasenbrücke zu regeln, an deren Klemmen der Motor angeschlossen ist, Verfahren bei dem die Steuersignale der Schalter für die obere und untere Bahn der jeweils zwei Zweige der gleichen Brückenphase identisch und um 180° verschoben sind, einen Stromflusswinkel ($A_1$ bis $A_6$) zwischen 120° und 180° haben und in einem Bereich von 60 elektrischen Graden ihres Stromflusswinkels von einem Signal (171) moduliert werden (mod. 1 - 3 - 5, mod. 2 - 6 - 4), dessen Frequenz und zyklischer Wert einerseits von einer Referenzspannung (18) abhängen und andererseits von einem Feedbacksignal (161), welches das Bild der elektromotorischen Kraft darstellt, gemessen an den Klemmen von zwei Motorphasen (UV), elektromotorische Kraft, deren Wert mit einem Koeffizienten —k multipliziert wird, während des Zeitraumes zwischen der Mitte des Intervalls gebildet vom Stromflusswinkel der Steuerung der unteren Bahn, welcher der besagten Motorphase zugeordnet ist und der Mitte des Intervalls gebildet vom Stromflusswinkel der Steuerung der oberen Bahn, welche der besagten Motorphase zugeordnet ist; und mit einem Koeffizienten +k während des Zeitraumes zwischen der Mitte des Intervalls gebildet vom Stromflusswinkel der Steuerung der oberen Bahn der Motorphase und der Mitte des Intervalls gebildet vom Stromflusswinkel der Steuerung der unteren Bahn der gleichen Phase.

2. Verfahren nach Anspruch 1, dadurch gekennzeichnet, dass besagtes Feedbacksignal korrigiert wird durch Hinzufügen des positiven Wertes eines zusätzlichen Signals (120), das einen Prozentsatz der gleichgerichteten und an besagten Motorklemmen (UV) entnommenen Spannung (11) darstellt, wobei besagter Prozentsatz von einem statischen Schalter (15) bestimmt wird, der proportional zur Modulationsfrequenz der Brückenschalter moduliert wird.

3. Vorrichtung zur Durchführung des Verfahrens nach Anspruch 1, mit einer Frequenzwandler-Schalterbrücke ($I_1$ bis $I_6$) des Typs zur Modulierung der Impulsbreite für die Versorgung des Motors (M), Vorrichtung in der die Steuersignale für die oberen Bahnen $I_1$, $I_3$, $I_5$) und für die unteren Bahnen ($I_2$, $I_4$, $I_6$) jeweils von einem ersten (21) und zweiten (22) Schaltkreis abgegeben werden, welche Steuersignale abgeben mit einem von einem Ringzähler (20) geregelten Stromflusswinkel, die von einem Signal (171) unterschiedlicher Frequenz moduliert werden, das von einem dritten Schaltkreis (17) geliefert wird, welcher Signale abgibt, deren Frequenz und zyklischer Wert abhängig sind von der Abweichung zwischen einem Signal, welches repräsentativ ist für die von einem Verstärker (23) gelieferten Ströme der Motorphasen und einem zweiten Signal; wobei jedes vom ersten Schaltkreis (21) ausgehende Steuersignal, welches den Schaltern der oberen Bahnen einer Phase entspricht, im Verhältnis zu den jeweiligen Steuersignalen des zweiten Schaltkreises (22), welche den Schaltern der unteren Bahnen entsprechen, identisch, aber um 180° verschoben ist; wobei besagtes zweites Signal von einem vierten Schaltkreis abgegeben wird, welcher einen proportionalen Integralregler (16) besitzt, der an seinem Eingang ein von einem Summator (162) geliefertes Signal erhält, welch Summator einerseits eine Referenzspannung (18) erhält, andererseits eine Feedbackspannung (161), geliefert von einem Schaltkreis (10), welcher, je nach dem Zustand eines Steuereingangs (101), mit einem positiven oder negativen Koeffizienten multipliziert, mittels eines zweiten Summators (12), wobei besagter Multiplikationskreis (10) mit der zwischen zwei Motorphasen (UV) entnommenen Spannung arbeitet, wobei die Steuerung (101) des Zeichens des besagten Koeffizienten von einer logischen Schaltung (25) abgegeben wird, die an ihren Eingängen die Steuersignale der Stromflusswinkel der Schalter für die der untersuchten Phase zugeordneten oberen und unteren Bahnen erhält.

4. Vorrichtung nach Anspruch 3, dadurch gekennzeichnet, dass besagte Feedbackspannung ausserdem ein fünftes Signal enthält, welches dem Ausgang des besagten Multiplikationskreises (10) hinzugefügt wird, wobei das besagte fünfte Signal von einem Gleichrichterkreis (11) geliefert wird, welcher die zwischen den besagten beiden Phasen (UV) entnommene Spannung erhält und durch einen Schalter (15) an den Eingang eines Addierers (12) angeschlossen ist, dessen zweiter Eingang (121) das Ausgangssignal des Multiplikationskreises (10) erhält; wobei besagter Schalter (15) von einem UND-Tor (26) gesteuert wird, an dessen einen Eingang ein Signal (170), welches das besagte Differenzfrequenzsignal (171) ergänzt, angelegt wird und an dessen anderen Eingang ein logischer Pegel 1 angelegt wird, wenn die Schaltungsfrequenz der Motorphasen einen vorbestimmten Wert übersteigt.

**Claims**

1. A method for regulating the supply of a multiphase asynchronous motor (M) taking into account the state of charge of a motor for adjusting the control signals of the switches ($I_1$ to $I_6$) of a multiphase bridge across the terminals of which the motor is connected, in which the control signals of the switches of the upper and lower paths, for the two respective arms of the same phase of the bridge, are identical and shifted by 180°, have an angle of flow ($A_1$ to $A_6$) comprised between 120° and 180°; and are modulated (mod 1 - 3 - 5, mod 2 - 6 - 4) on 60 electrical degrees of their angle of flow, by a signal (171) the frequency and cyclic ratio of which are depending, on the one hand, on a reference voltage (18) and, on the other hand, on a feedback signal (161) representing the image of the electromotive force as measured across the terminals of two phases (UV) of the motor, the value of said electromotive force being multiplied by a coefficient —k during the time interval comprised between the middle of the interval defined by the angle of flow of the lower path control associated with said motor phase and the middle of the interval defined by the angle of flow of the upper path control associated with the motor phase; and by a coefficient +k during the time interval comprised between the middle of the interval of the angle of flow of the upper path control of the motor phase and the middle of the interval of the angle of flow of the lower path control for said same phase.

2. A method according to claim 1, characterized in that said feedback signal is corrected by adding the positive value of a further signal (120) representing a percentage of the rectified voltage (11) taken across the said motor terminals (UV), said percentage being defined by a static switch (15) modulated proportionally to the modulation frequency of the switches of the bridge.

3. An apparatus for implementing the method according to claim 1, comprising a frequency converter switch bridge ($I_1$ to $I_6$) of the pulse width modulation type which supplies the motor (M), in which the control signals are supplied, for the upper paths ($I_1$, $I_3$, $I_5$) and for the lower paths ($I_2$, $I_4$, $I_6$) respectively by a first circuit (21) and a second circuit (22) which deliver control signals having an angle of flow which is controlled by a ring counter (20) and being modulated by a signal (171) of a different frequency delivered by a third circuit (17) which generates signals whose frequency and cyclic ratio are a function of the deviation between a signal representative of the currents of the motor phases supplied by an amplifier (23) and a second signal; each of the control signals originated by the first circuit (21) and corresponding to the switches of the upper paths of a phase being identical, but shifted by 180° with respect to each of the control signals originated by the second circuit (22) and corresponding to the switches of the lower paths; said second signal supplied by a fourth circuit comprising a proportional integral regulator (16) receiving at its input a signal supplied by a summer (162) receiving in its turn on the one hand, a reference voltage (18), on the other hand, a feedback voltage (161) supplied by a circuit (10) for multiplying by a positive or negative coefficient, depending on the state of a control input (101), by means of a second summer (12), said multiplying circuit (10) operating on a voltage taken between two phases (UV) of the motor, the control (101) of the sign of said coefficient being supplied by a logic circuit (25) which receives at its inputs the signals for controlling the angles of flow of the switches for the upper and lower paths associated with the observed phase.

4. An apparatus according to claim 3, characterized in that said feedback voltage further comprises a fifth signal added to the output of said multiplying circuit (10), said fifth signal being supplied by a rectifier circuit (11) which receives the voltage taken between the said two phases (UV) and is connected by a switch (15) to the input of an adder (12) whose second input (121) receives the output signal of the multiplying circuit (10), said switch (15) being controlled by an AND gate to an input of which a signal (170) is applied, complementary to said different frequency signal (171) and to the other input of which a logic level ONE is applied when the switching frequency of the motor phases exceeds a predetermined value.

FIG.1

FIG. 2

# FIG. 3